# EUROPEAN PATENT APPLICATION

(11) **EP 1 808 771 A1**
(43) Date of publication of application: **18.07.2007**
(21) Application number: 06715556.4
(22) Date of filing: 10.03.2006
(51) Int. Cl.: G06F 13/00, H04L 12/54, H04L 12/58

(54) **INFORMATION PROCESSING TERMINAL, CONTENT PROVIDING SYSTEM, CONTENT PROVIDING METHOD, AND CONTENT PROVIDING PROGRAM**

(30) Priority: 16.03.2005 JP 2005075025
(71) Applicant: MATSUSHITA ELECTRIC INDUSTRIAL CO., LTD., Osaka 571-8501 (JP)
(72) Inventor: TAKEI, Yuuko c/o Matsushita El. Ind. Co. Ltd., Chuo-ku, Osaka-shi, Osaka 540-6319 (JP)
(74) Representative: Grünecker, Kinkeldey, Stockmair & Schwanhäusser Anwaltssozietät
(86) International application number: PCT/JP2006/304786
(87) International publication number: WO 2006/098245

(57) **Abstract**

The invention provides a content providing system for making it possible to use URL information retained in a PC terminal from a mobile terminal and store content acquired as the mobile terminal accesses any URL in the PC terminal. The content providing system of the invention is a content providing system including a PC terminal 20, a mobile terminal 30 that can conduct communications with the PC terminal 20, and a Web server 10 for providing content data for the PC terminal 20 through the Internet. The PC terminal 20 has a folder 21 storing the content identifier corresponding to the content data; and an information table 28 made up of a user ID for each mobile terminal and a terminal ID and terminal specifications of the mobile terminal corresponding to the user ID. When access is made from the mobile terminal 30, if the user ID and the terminal ID extracted from the mobile terminal 30 are stored in the information table 28, the mobile terminal 30 is permitted to access the folder 21, and selects the content identifier stored in the folder 21.

## Description

### Technical Field

This invention relates to an information processing terminal, a content providing system, a content providing method, and a content providing program for providing content for a mobile terminal from a PC terminal that can be connected to the Internet from a content server.

### Background Art

Content of an HTML file, an image file, a moving image file, an audio file, etc., in a content server has been provided for a mobile terminal including a wireless communication function with improvement in the Internet environment and development of the mobile communication technology. As an example of a content providing system in a related art, if there is image data cited in content data distributed to an Internet terminal, conversion of the content data to the description format corresponding to the access method of the Internet terminal and conversion of the image data to an image file format in which an image can be displayed on the Internet terminal are executed separately and the provided content data and/or image data is distributed to the Internet terminal (for example, refer to patent document 1).

There is an example wherein an electronic file is received from a terminal of an information originator and is converted into an HTML format in which data can be displayed in a Web browser by an electronic file translation server and the provided electronic file is archived with a predetermined URL address added thereto and the archive URL address can be browsed on the Internet or an intranet (for example, refer to patent document 2).

Further, there is an example wherein a search is made for mobile communication network sites at a Web site on the Internet accessed via a PC terminal and the mobile communication network sites are listed and the URL of any desired site from among the listed mobile communication network sites is sent to a communication terminal of the specified mobile communication network (for example, refer to patent document 3).

Patent document 1: WO2002-44906
Patent document 2: JP-A-2003-141029
Patent document 3: JP-A-2002-342190

### Disclosure of the Invention

### Problems to be Solved by the Invention

However, in the first and second examples, there are circumstances where location of a file cannot easily be obtained and streaming type content cannot be viewed. In the third example, the URL information retained in a PC terminal cannot be used or updated from a communication terminal of a mobile communication network.

It is therefore an object of the invention to provide an information processing terminal, a content providing system, a content providing method, and a content providing program for making it possible to use URL information retained in the PC terminal from a mobile terminal and store content acquired as the mobile terminal accesses any URL.

An information processing terminal, a content providing system, a content providing method, and a content providing program for making it possible to browse content that cannot be browsed on a mobile terminal and acquire streaming type content with a mobile terminal are provided.

### Means For Solving the Problems

An information processing terminal of the invention is an information processing terminal being capable of conducting a communication with a mobile communication terminal and being provided with content data from a Web server, and includes content identifier storage unit for storing a content identifier corresponding to the content data; table storage unit for storing a table made up of a user ID for each mobile communication terminal and a terminal ID and a terminal specification of the mobile communication terminal corresponding to the user ID; extraction unit for extracting the user ID and the terminal ID of the mobile communication terminal when the information processing terminal is accessed from the mobile communication terminal; determination unit for permitting the mobile communication terminal to access the content identifier storage unit when the user ID and the terminal ID extracted by the extraction unit are stored in the table; and selection acceptance unit for accepting selection operation from the mobile communication terminal for selecting the content identifier stored in the content identifier storage unit when the determination unit permits the mobile communication terminal to access the content identifier storage unit.

A content providing system of the invention is a content providing system including an information processing terminal that can be connected to the Internet, a mobile communication terminal that can conduct communications with the information processing terminal, and a Web server for providing content data for the information processing terminal through the Internet, wherein the information processing terminal has content identifier storage unit for storing a content identifier corresponding to the content data; table storage unit for storing a table made up of a user ID for each mobile communication terminal and a terminal ID and a terminal specification of the mobile communication terminal corresponding to the user ID; extraction unit for extracting the user ID and the terminal ID of the mobile communication terminal when the information processing terminal is accessed from the mobile communication terminal; and determination unit for permitting the mobile communication terminal to access the content identifier storage unit when the user ID and the terminal ID extracted by the extraction unit are stored in the table, and when access to the content identifier storage unit is permitted, the mobile communication terminal selects the content identifier stored in the content identifier storage unit.

A content providing method of the invention is a content providing method of providing content data retained by a Web server connected to the Internet for a mobile communication terminal from an information processing terminal connected to the Internet, and has an extraction step of extracting a user ID and a terminal ID of the mobile communication terminal by the information processing terminal when the information processing terminal is accessed from the mobile communication terminal; a permission step of permitting access from the mobile communication terminal by the information processing terminal when the extracted user ID and terminal ID are contained in a table made up of the user ID for each mobile communication terminal and the terminal ID and the terminal specification of the mobile communication terminal corresponding to the user ID, stored in the information processing terminal; and a selection step of selecting a content identifier corresponding to the content data stored in the information processing terminal by the mobile communication terminal.

A content providing program of the invention causes a computer to execute the steps of the content providing method of the invention.

According to the configuration, the URL retained in a PC terminal can be used from a mobile terminal and the content in the PC terminal can be easily acquired via a standard viewer of the mobile terminal.

The information processing terminal of the invention may include reception unit for receiving the content data corresponding to the content identifier accepted through the selection acceptance unit from the Web server; conversion unit for referencing the terminal specification responsive to the terminal ID of the mobile communication terminal and converting the content data received by the reception unit into a browseable format on the mobile communication terminal; and sending unit for sending the content data provided by the conversion unit to the mobile communication terminal.

The content providing method of the invention may have a reception step of receiving the content data corresponding to the content identifier selected by the mobile communication terminal from the Web server by the information processing terminal; a conversion step of referencing the terminal specification responsive to the terminal ID of the mobile communication terminal and converting the received content data into a browseable format on the mobile communication terminal by the information processing terminal; and a sending step of sending the provided content data to the mobile communication terminal by the information processing terminal.

According to the configuration, a page or content that cannot be browsed on a mobile terminal can be browsed.

The information processing terminal of the invention may include reception unit for receiving the content data corresponding to the content identifier accepted through the selection acceptance unit from the Web server; and content data storage unit for storing the content data received by the reception unit, wherein the content data storage unit may store the content data that cannot be browsed on the mobile communication terminal, of the content data received by the reception unit.

The content providing method of the invention may have a reception step of receiving the content data corresponding to the content identifier selected by the mobile communication terminal from the Web server by the information processing terminal; and a storage step of storing the content data that cannot be browsed on the mobile communication terminal, of the received content data by the information processing terminal.

According to the configuration, the content whose publication time period is limited can be downloaded into a PC terminal from a mobile terminal while the user goes out.

The information processing terminal of the invention may include a conversion unit for referencing the terminal specification responsive to the terminal ID and converting the content data stored in the content data storage unit into a browseable format on the mobile communication terminal; and a sending unit for sending the content data provided by the conversion unit to the mobile communication terminal, wherein the content data storage unit may divide the content data received by the reception unit for storage, wherein the conversion unit may convert each piece of the content data divided and stored in the content data storage unit into a browseable format on the mobile communication terminal, and wherein the sending unit may send each piece of the content data provided by the conversion unit to the mobile communication terminal by mail.

The content providing method of the invention may have a conversion step of referencing the terminal specification responsive to the terminal ID and converting the stored content data into a browseable format on the mobile communication terminal by the information processing terminal; and a sending step of sending the provided content data to the mobile communication terminal by the information processing terminal, wherein the storage step may divide the received content data for storage, wherein the conversion step may convert each piece of the content data divided and stored into a browseable format on the mobile communication terminal, and wherein the sending step may send each piece of the provided content data to the mobile communication terminal by mail.

According to the configuration, the content of a large size exceeding the limitation of a mobile terminal can be browsed.

In the information processing terminal of the invention, the content data sent by mail may be limited in the number of playback times.

According to the configuration, the content of a large size exceeding the limitation of a mobile terminal can be browsed.

The information processing terminal of the invention may include registration unit for registering a different content identifier contained in the content data received by the reception unit as link information in the content identifier storage unit.

The content providing method of the invention may have a registration step of registering a different content identifier contained in the received content data as link information in the information processing terminal.

According to the configuration, a new URL obtained from a link, etc., can be retained in a PC terminal.

The information processing terminal of the invention may include the sending unit includes VolP calling unit, and wherein when the content data corresponding to the content identifier selected through the mobile communication terminal contains audio data, the VoIP calling unit may call the mobile communication terminal according to VoIP and may send the audio data.

According to the configuration, it is made possible to browse streaming content in a mobile terminal incompatible with the streaming protocol.

### Advantages of the Invention

According to the invention, there can be provided an information processing terminal, a content providing system, a content providing method, and a content providing program for making it possible to use URL information retained in the PC terminal from a mobile terminal and store content acquired as the mobile terminal accesses any URL in the PC terminal.

An information processing terminal, a content providing system, a content providing method, and a content providing program for making it possible to browse content that cannot be browsed on a mobile terminal and acquire streaming type content with a mobile terminal can also be provided.

### Brief Description of the Drawings

FIG. 1 is a block diagram to show the schematic configuration of a content providing system according to an embodiment of the invention
FIG. 2 is a flowchart to describe the basic sequence of a content providing method according to the embodiment of the invention
FIG. 3 is a flowchart to describe the basic sequence of the content providing method according to the embodiment of the invention (continued from FIG. 2)
FIG. 4 (a) is a drawing to show an example of an initial selection screen in the basic sequence of the content providing method according to the embodiment, Fig. 4(b) is a drawing to show an example of a document selection screen in the basic sequence of the content providing method according to the embodiment, and Fig.4(c) is a drawing to show an example of an Internet bookmark selection screen in the basic sequence of the content providing method according to the embodiment
FIG. 5 is a flowchart to describe a Web page browsing processing procedure of the content providing method according to the embodiment of the invention
FIG. 6 is a flowchart to describe a Web page browsing processing procedure of the content providing method according to the embodiment of the invention (continued from FIG. 5)
FIG. 7 (a) is a drawing to show an example of a Web page display screen in Web browsing processing of the content providing method according to the embodiment, Fig.7(b) is a drawing to show an example of a display-impossible notification and retention/non-retention selection screen in the PC in the Web browsing processing of the content providing method according to the embodiment, and Fig.7(c) is a drawing to show an example of a retention success notification screen in the Web browsing processing of the content providing method according to the embodiment
FIG. 8 is a flowchart to describe a Web registration processing procedure of the content providing method according to the embodiment of the invention
FIG. 9 is a drawing to show an example of a retention folder selection screen in the Web registration processing of the content providing method according to the embodiment
FIG. 10 is a flowchart to describe a backup mode change processing procedure of the content providing method according to the embodiment of the invention
FIG. 11 is a drawing to show an example of a backup mode change processing screen in the backup mode change processing of the content providing method according to the embodiment
FIG. 12 is a flowchart to describe a file browsing processing procedure of the content providing method according to the embodiment of the invention
FIG. 13 (a) is a drawing to show an example of a file display screen in file browsing processing of the content providing method according to the embodiment and Fig. 13(b) is a drawing to show an example of a display-impossible notification screen in the Web browsing processing of the content providing method according to the embodiment

### Description of Reference Numerals

- 10: Web server
- 11: Content
- 20: PC terminal
- 28: User and terminal profile information table
- 30: Mobile terminal
- 32: Viewer
- 300: Post-conversion content

### Best Mode for Carrying out the Invention

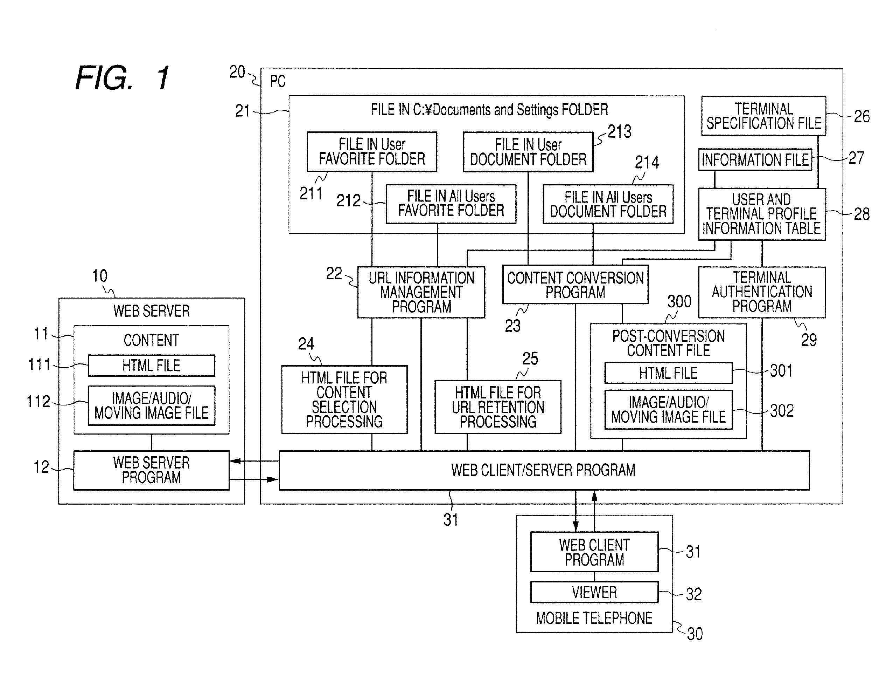

An embodiment of the invention will be discussed with the accompanying drawings. FIG. 1 is a block diagram to show the schematic configuration of a content providing system according to an embodiment of the invention.
As shown in FIG. 1, the content providing system is made up of a Web server 10 for providing content, a PC terminal 20 that can access the Web server 10 through the Internet, and a mobile terminal 30 such as a mobile telephone that can access the PC terminal 20 through a mobile communication network.

The Web server 10 includes a content file 11 made up of an HTML file 111 and an image/audio/moving image file 112 and a Web server program 12 for controlling connection to the Internet.

The PC terminal 20 includes a C:¥Documents and Settings file 21 made up of a User favorite file 211, an All Users favorite file 212, a User document file 213, and an All Users document file 214, a URL information management program 22, a content conversion program 23, a HTML file for content selection processing 24, a HTML file for URL retention processing 25, a terminal specification file 26 for retaining mobile terminal determination information of the model name, the manufacturing number, the subscriber ID, etc., an information file 27 for retaining user agent information, a user and terminal profile information table 28 for retaining default data, for example, as listed in Table 1, determined based on the terminal specification file 26 and the information file 27, a terminal authentication program 29, a post-conversion content file 30 made up of an HTML file 301 and an image/audio/moving image file 302 after conversion, and a Web client/server program 31 for controlling connection to the Internet.

**[Table 1]**

| | User 1 | · · · | · · · |
|---|---|---|---|
| Mail address | suzukitaro@tokyonet. ne. jp | | |
| User agent information | DoCoMo/2.0 | | |
| | P900i(c100;TB;W22H12;ser1234 | | |
| | 56789012345; | | |
| | Icc12345678901234567890) | | |
| Screen size (horizontal dots X vertical dots) | 240/320 | | |
| Content maximum size (bytes) | 100000 | | |
| Markup language | C-HTML5.0 | | |
| Document format before/after conversion | HTML/C-HTML5.0 | | |
| | doc/C-HTML5.0 | | |
| | pdf/C-HTML5.0 | | |
| Still image format before/after conversion | JPG/JPG | | |
| | GIF/GIF | | |
| | TIF/JPG | | |
| Moving image format before/after conversion | MPEG-2/MPEG-4 | | |
| | H.264/MPEG-4 | | |
| | MPEG-4/MPEG-4 | | |
| | WindowsMedia/ MPEG-4 | | |
| | RealVideo/MPEG-4 | | |
| Audio format before/after conversion | AAC/AAC | | |
| | AMR/AAC | | |
| | MP3/AAC | | |
| | G. 726/AAC | | |
| | Windows Media Audio/AAC | | |
| | RealAudio/AAC | | |
| Moving image/audio multiplexing format before/after conversion | ASF/MP4 | | |
| | WMA/ MP4 | | |
| | RM/MP4 | | |
| Streaming metafile format before/after conversion | ASX/MP4 | | |
| | RAM/MP4 | | |
| Internet bookmark folder 1 | C:¥Documents and | | |
| | Settings¥user1¥Favorites | | |
| Internet bookmark folder 2 | C:¥Documents and Settings¥All | | |
| | UsersYFavorites | | |
| Document folder 1 | C:¥Documents and | | |
| | Settings¥user1¥My Documents | | |
| Document folder 2 | C:¥Documents and Settings¥All | | |
| | Users¥Documents | | |
| Content retention folder | C:¥Documents and | | |
| | Settings¥user1¥My | | |
| | Documents¥remoteFolder | | |
| PC backup mode | OFF | | |

The mobile terminal 30 includes a Web client program 31 for controlling connection to the PC terminal 20 through a mobile communication network and a viewer program 32 for controlling display of acquired content.

Next, an operation outline of the described content providing system will be discussed.

### (1) Registration in PC terminal

First, the URL of a user registration page in the PC terminal 20 (that can be used only in the specified time only once) is sent to the mobile terminal 30 by mail. When the mobile terminal 30 accesses the URL (the user name can be entered), the PC terminal 20 extracts user agent information in an HTTP header (containing information of the model name, the manufacturing number, the subscriber ID, etc., based on which the terminal can be determined) and compares the POST-sent user name with the account name of the PC terminal 20. If they match, the PC terminal stores the user name (account name managed by the PC terminal 20) of the mobile terminal, the user agent information, and specifications of the corresponding content (multimedia format, codec, screen size, display color, HTML version, etc.,) in the user and terminal profile information table 28, and updates the information file. After completion of the registration, the URL of the PC terminal 20 is sent to the registered mobile terminal 30 by mail.

Initially the default data as listed in Table 1, determined based on the user agent information and the terminal specification file (retaining the specifications for each model) is entered in the user and terminal profile information table 28. The data indicating which format is to be converted into the corresponding format can be rewritten from the corresponding user's mobile terminal 30 by providing the URL for rewrite.

### (2) Start method of PC terminal 20 from outside

The PC terminal 20 is started using a function of WOL (Wake On LAN) or WOR (Wake On Ring) by the mobile terminal 30 or a different computer via a network where feasible.

### (3) Terminal authentication

If the user agent information in the HTTP header sent from the mobile terminal 30 accessing the URL is registered in the user and terminal profile information table 28, the authentication result is OK. Later, the session ID is all added to the link destinations of the sent file.

### (4) Selectable URL/file display (the accessable range changes in response to the user.)

Just after the authentication, the PC terminal 20 sends a HTML file for content selection processing for selecting the acquisition destination from among the following is sent (with link. The link destination is made in the PC terminal and the session ID is added to the URL):

(a) Folder, shortcut file just below favorite folder of each user (C:¥Documennts and Settings¥XX¥Favorites)
(b) Folder, shortcut file just below favorite folder (C:¥Documennts and Settings¥All Users¥Favorites)
(c) Document folder of each user (C:¥Documennts and Settings¥XX¥MyDocumennts)
(d) Document folder of All Users (C:¥Documents and Settings¥All Users¥MyDocumennts)

Each folder mentioned above can be changed as the PC terminal manager rewrites the user and terminal profile information table 28 in the PC terminal 20. The displayed information may be not only documents and favorite information, but also information of an address book managed by a mailer in the PC terminal 20 (the address book corresponding to the user name obtained by collating the user agent information of the mobile terminal with the user and terminal profile information table 28). In this case, the PC terminal converts the name and the mail address into the HTML format and sends to the mobile terminal 30. After this, a URL selection HTML file is created according to user's selection and is sent to the user.

### (5) Content conversion

When URL is selected, the PC terminal 20 acquires data from WWW server. The content conversion program 23 in the PC terminal 20 determines the browseable format in the mobile terminal 30 from the user agent information in the HTTP header sent from the mobile terminal 30 and the information in the user and terminal profile information table 28 and converts the information into the format and further changes the link destination in the page to the URL in the PC terminal and sends the URL to the mobile terminal 30. At this time, the following processing is also performed:

(a) Display of "favorite addition" is added to the sending page and when the link destination is selected, a retention folder selection HTML file is sent and the URL is retained in the PC terminal 20 according to user's folder selection on the screen.

(b) If the link destination of the page in the WWW server requested by the user (specified by a tag of <a href=""/>, etc.,) contains an image, moving image, audio file (specified by a tag of <img scr=""/>, etc.,), the file may be converted into the browseable format in the mobile terminal 30 and the provided file may be retained in the PC terminal 20 and the location of the file may be specified as the link destination.

(c) If the content exceeds the content maximum size in the user and terminal profile information table 28, the content is divided matching the terminal and in the link destination of button "UP," "DOWN," "EXPAND," "REDUCE" on an HTML viewer, the location of the data sent if the button is pressed is specified.

(d) If the file is a file that cannot be converted for a reason such that the format is not described in the user and terminal profile information table 28, an HTML file for display-impossible notification and retention/non-retention selection in the PC terminal is sent. If "Yes" is selected, the file is retained in the content retention folder in the user and terminal profile information table 20.

(e) The terminal specification file 26 describes the specifications for each model and the information in the file may be automatically acquired by the Web client/server program in the PC terminal 20 from a server outside the PC terminal 20 or may be written by the PC terminal manager.

(f) If file is selected, the content conversion program 23 in the PC terminal 20 converts the file into the browseable format in the mobile terminal 30, such as HTML, and sends the file.

If the link destination of the page in the WWW server requested by the user (specified by a tag of <a href=""/>, etc.,) contains a moving image or an audio file and the user selects the file, the file of only a predetermined size is downloaded and the playback time is acquired. At this time, if the playback time is outside the range in which the file can be played back in the mobile terminal 30, a notification screen to the effect that the file will be later sent by mail is sent and then downloading the file is started. The downloaded data is divided and is sent by mail as content that can be played back only once. The next download destination specification is also possible during the downloading. However, the data can also be sent collectively. After sending to the mobile terminal 30, the already converted data in the PC terminal 20 is discarded.

If the link destination of the page in the WWW server requested by the user (specified by a tag of <a href=""/>, etc.,) contains streaming information described as a streaming metafile in the user and terminal profile information table 28 and the user selects the streaming information, the streaming information is downloaded and the location of the file main body contained in the streaming information, for example, mms://xxxx.wmv, rtsp://xxxx.rm, etc., is analyzed and the file is downloaded and is converted into the browseable format in the mobile terminal 30. At this time, if the mobile terminal 30 can play back content with no file size description without limiting the size, conversion data is sent during downloading by the PC terminal 20 as content with the number of playback times 0 (non-retained content). Otherwise, a notification screen to the effect that the file will be later sent by mail is sent and then downloading the file is started. The downloaded data is divided and is sent by mail as content that can be played back only once. The next download destination specification is also possible during the downloading. However, the data can also be sent collectively. After sending to the mobile terminal 30, the already converted data in the PC terminal 20 is discarded.

Further, if the link destination of the page in the WWW server requested by the user (specified by a tag of <a href=""/>, etc.,) contains streaming information described as a streaming metafile in the user and terminal profile information table 28 and the user selects the streaming information, the PC terminal 20 may automatically call VolP and after a call is established, the PC may send a streaming request to the server and the PC terminal 20 may send audio acquired by playback redirect according to VoIP. The calling is conducted using a call control method of SIP, H.323, MGCP, etc., for example.

Next, the operation outline of the described content providing system will be discussed with flowcharts.

### (Basic sequence)

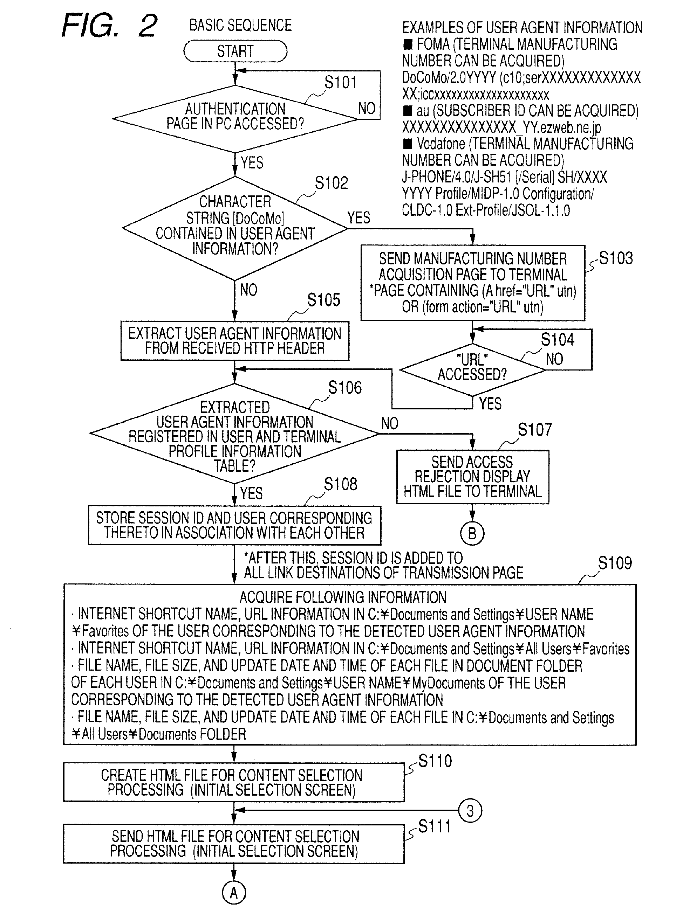

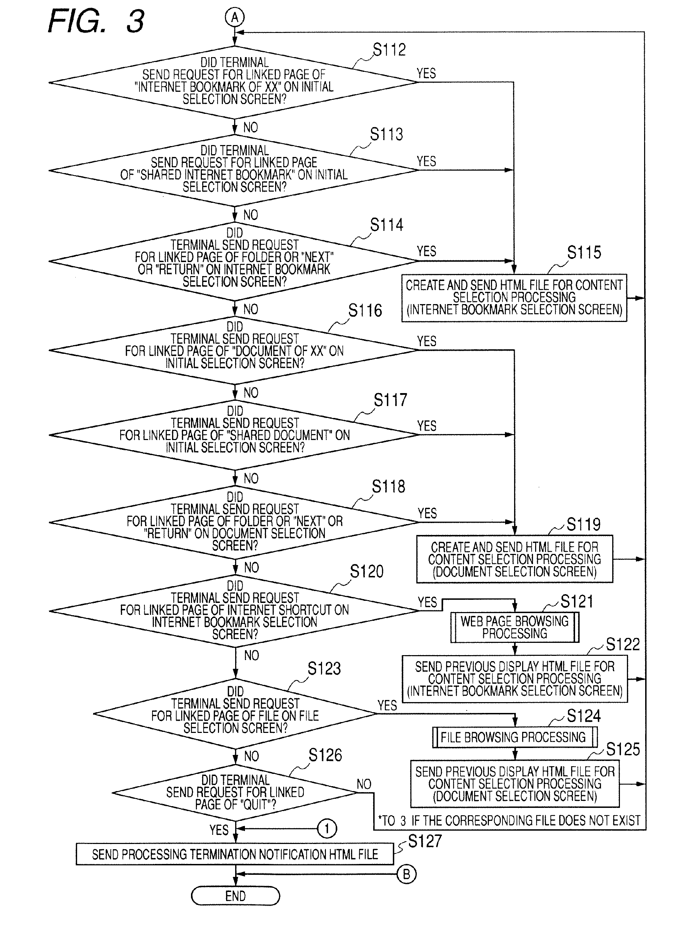

FIGS. 2 and 3 are flowcharts to describe the basic sequence of the content providing system according to the embodiment.

First, at step S101, whether or not the mobile terminal 30 accesses the authentication page in the PC terminal 20 is determined and if it is determines that the mobile terminal 30 accesses the authentication page, whether or not the user agent information contains a character string of "DoCoMo" is determined (step S102).

If the user agent information contains the character string "DoCoMo" as a result of the determination at step S102, a manufacturing number acquisition page is sent to the mobile terminal 30 (step S103) and subsequently the system waits for access to the URL of user registration page (step S104). If utn attribute described at step S103 is added to A tag or FORM tag, the manufacturing number of the accessed terminal is sent to the server. However, it is sent after acknowledgement of the user. If the user rejects sending of the manufacturing number, it is not determined at step 106 that the extracted user agent information is registered in the user and terminal profile information table, and the process jumps to step 107.

If it is not determined at step S102 that the user agent information contains the character string "DoCoMo" and if it is determined at step S104 that the URL is accessed, the user ID of the subscriber ID (individual identification number assigned to each terminal of mobile telephone), etc., or the individual ID of the manufacturing number of the mobile terminal 30, etc., is extracted in response to the user agent information in the received HTTP header (step S105). For example, the subscriber ID can be acquired from a mobile terminal of au and the terminal manufacturing number and an arbitrary character string of the manufacturer can be acquired from a mobile terminal of vodafone.

Next, whether or not the extracted user agent information is registered in the user and terminal profile information table 28 is determined (step S106). If it is not determined that the extracted user agent information is registered, an HTML file for displaying access rejection is sent to the mobile terminal 30 (step S107) and the processing is terminated.

On the other hand, if it is determined at step S106 that the extracted user agent information is registered in the user and terminal profile information table 28, the session ID and the user corresponding thereto are stored in association with each other (step S108) and the following information is also acquired:

(1) Internet shortcut name, URL information in C:¥Documennts and Settings¥user name¥Favorites of the user corresponding to the detected user agent information.
(2) Internet shortcut name, URL information in C:¥Documennts and Settings¥All Users¥Favorites.
(3) File name, file size, and update date and time of each file in Document folder of each user in C:¥Documennts and Settings¥user name¥MyDocumennts of the user corresponding to the detected user agent information.
(4) File name, file size, and update date and time of each file in C:¥Documents and Settings¥All Users¥Documennts.

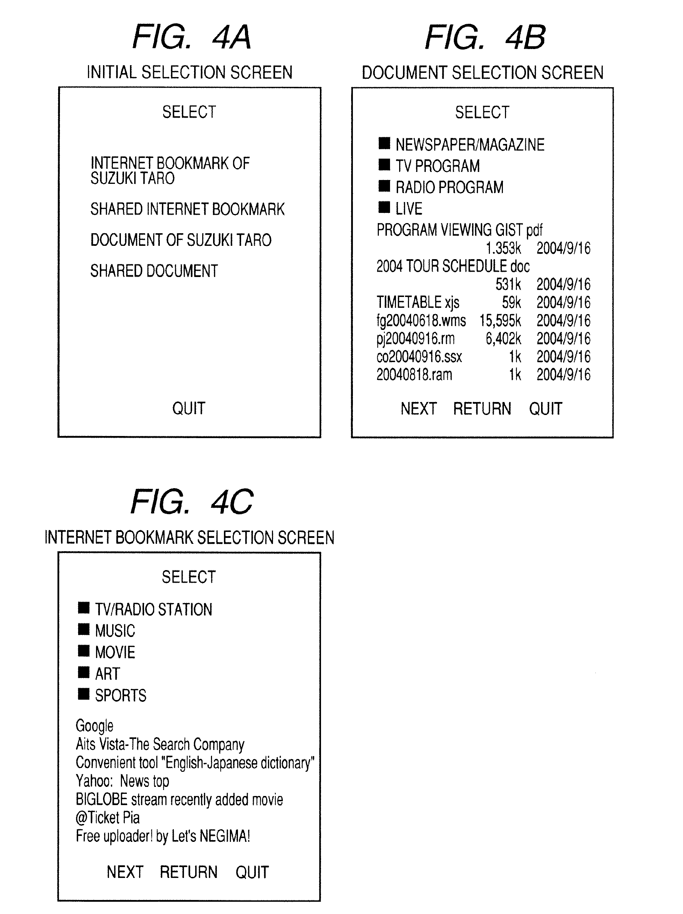

Next, a HTML file for content selection processing for displaying an initial selection screen as shown in FIG. 4 (a) on the mobile terminal 30 is created (step S110) and is sent (S111).

At steps S112 and S113, whether or not the mobile terminal 30 sends a request for the linked page of "Internet bookmark of XX" and sends a request for the linked page of "shared Internet bookmark" on the initial selection screen is determined. If it is not determined that any requests are sent, further at step S114, whether or not the mobile terminal 30 sends a request for the linked page of a folder or "NEXT" or "RETURN" on an Internet bookmark selection screen as shown in FIG. 4 (c) is determined.

On the other hand, if the mobile terminal 30 sends a request for the linked page at any of steps S112 to S114, a HTML file for content selection processing for displaying the Internet bookmark selection screen is created and is sent (step S115) and the process returns to step S112.

At steps S116 and S117, whether or not the mobile terminal 30 sends a request for the linked page of "document of XX" and sends a request for the linked page of "shared document" on the initial selection screen is determined. If it is not determined that any requests are sent, further at step S118, whether or not the mobile terminal 30 sends a request for the linked page of a folder or "NEXT" or "RETURN" on a document selection screen as shown in FIG. 4 (b) is determined.

If the mobile terminal 30 sends a request for the linked page at any determination of steps S116 to S118, a HTML file for content selection processing for displaying the document selection screen is created and is sent (step S119) and the process returns to step S112.

On the other hand, if the mobile terminal 30 does not send a request for the linked page of a folder or "NEXT" or "RETURN" on the document selection screen at step S118, subsequently whether or not the mobile terminal 30 sends a request for the linked page of Internet shortcut on the Internet bookmark selection screen as shown in FIG. 4 (c) is determined (step S120). If the mobile terminal 30 sends a request for the linked page of Internet shortcut, a Web page browsing processing subroutine described later is executed (step S121). Then, a previous display HTML file for content selection processing for displaying the Internet bookmark selection screen as shown in FIG. 4 (c) is created and is sent (step S122) and the process returns to step S 112.

If the mobile terminal 30 does not send a request for the linked page of Internet shortcut at step S120, whether or not the mobile terminal 30 sends a request for the linked page of file on a file selection screen is determined (step S123). If the mobile terminal 30 sends a request for the linked page of file, a file browsing processing subroutine described later is executed (step S124). Then, a previous display HTML file for content selection processing for displaying the document selection screen as shown in FIG. 4 (b) is created and is sent (step S125) and the process returns to step S112.

If the mobile terminal 30 does not send a request for the linked page of file at step S123, whether or not the mobile terminal 30 sends a request for the linked page of "QUIT" is determined (step S126). If the mobile terminal 30 does not send a request for the linked page of "QUIT" as a result of the determination, the process returns to step S112. On the other hand, if the mobile terminal 30 sends a request for the linked page of "QUIT," a processing termination notification HTML file is sent (step S127) and the processing is terminated.

### (Web page browsing processing)

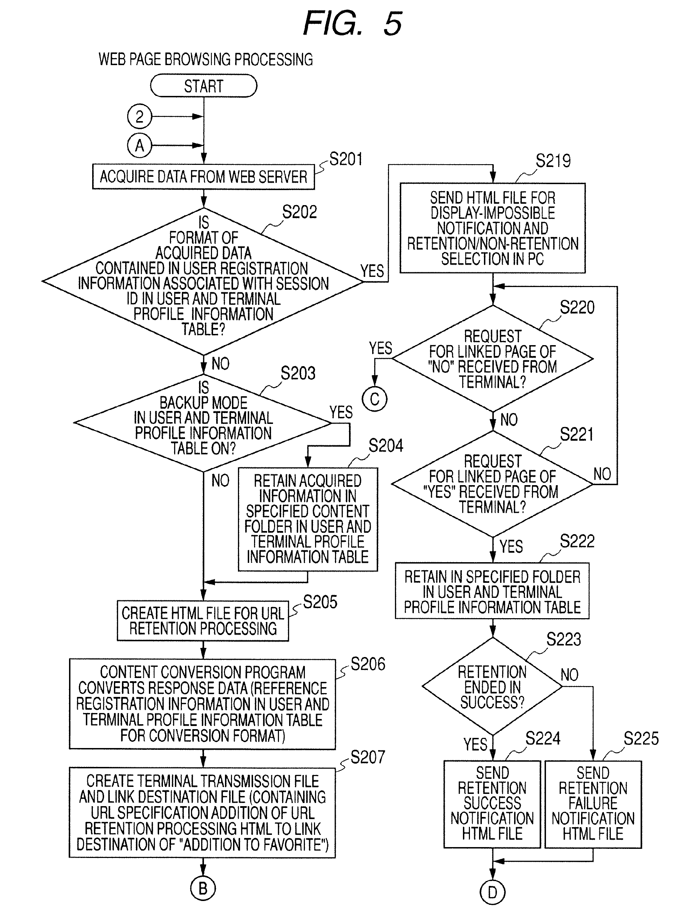

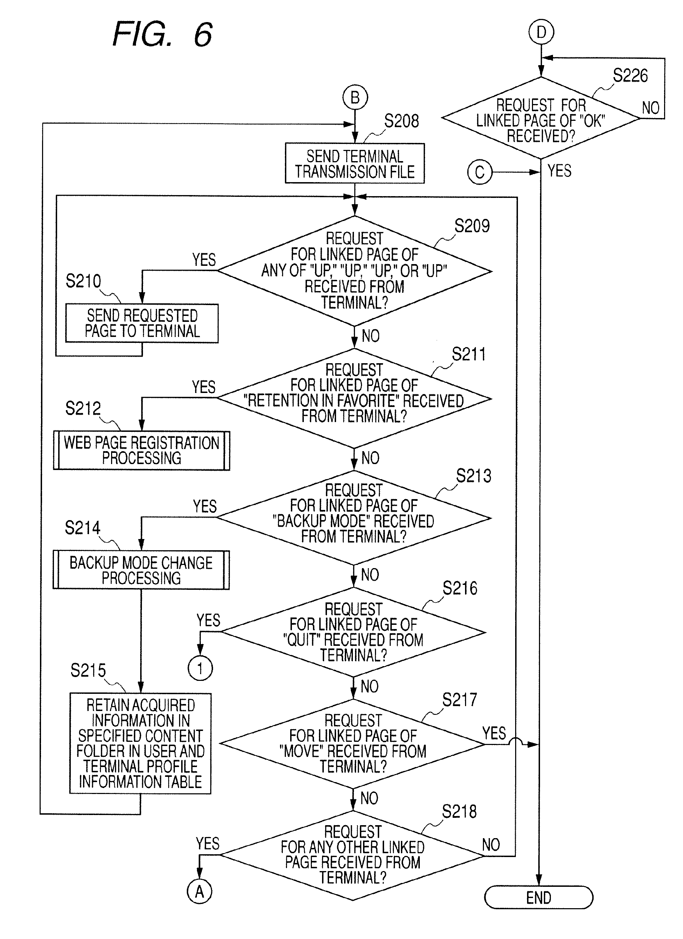

FIGS. 5 and 6 are flowcharts to describe a Web page browsing processing procedure of the content providing system according to the embodiment.

First, the PC terminal 20 acquires data from the Web server 10 (step S201) and determines whether or not the format of the acquired data is contained in the user registration information associated with the session ID in the user and terminal profile information table 28 (step S202). If the format of the data is not contained in the user registration information as a result of the determination, whether or not the backup mode in the user and terminal profile information table 28 is set to ON is determined (step S203). If it is not determined that the backup mode is set to ON, the process goes to step S205. On the other hand, if it is determined that the backup mode is set to ON, the acquired data is retained in the specified folder in the user and terminal profile information table 28 (step S204) and then the process goes to step S205.

At step S205, a URL retention processing HTML file is created. Subsequently, at step S206, response data is converted by the content conversion program 23.

At step S207, a sending file of the mobile terminal 30 and a link destination file are created. URL specification addition of URL retention processing HTML to the link destination of "addition to favorite" is contained.

Next, the sending file is sent to the mobile terminal 30 (step S208).

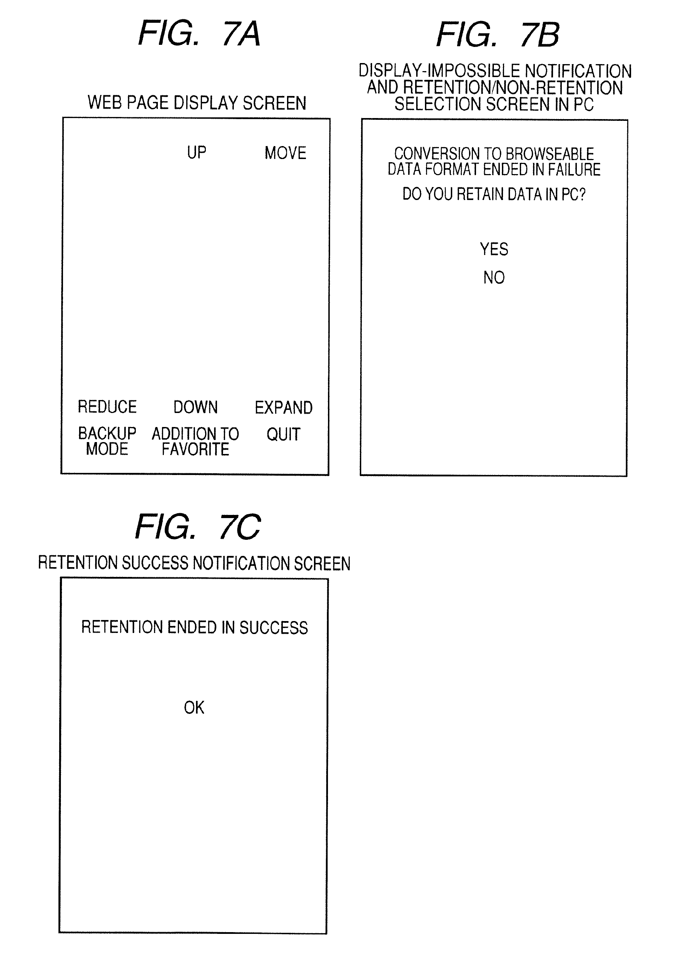

At step S209, whether or not a request for the linked page of any of "UP," "DOWN," "EXPAND," or "REDUCE" on a Web display screen shown in FIG. 7 (a) is received from the mobile terminal 30 is determined. If a request is received, the requested linked page is sent to the mobile terminal 30 at step S210 and the process returns to step S209.

On the other hand, if no request for the linked page is received as a result of the determination at step S209, whether or not a request for the linked page of "retention in favorite" is received from the mobile terminal 30 is determined at step S211. If a request is received, the process goes to step S212 and a Web page registration processing subroutine described later is executed and the process returns to step S208.

If a request for the linked page of "retention in favorite" is not received from the mobile terminal 30 at step S211, subsequently whether or not a request for the linked page of "BACKUP MODE" is received from the mobile terminal 30 is determined at step S213. If a request is received, the process goes to step S214 and a backup mode change processing subroutine described later is executed and acquired information is retained in the specified content folder in the user and terminal profile information table 28 (step S215) and the process returns to step S208.

On the other hand, if a request for the linked page of "BACKUP MODE" is not received from the mobile terminal 30 at step S213, subsequently whether or not a request for the linked page of "QUIT" is received from the mobile terminal 30 is determined at step S216. If a request is received, the process goes to step S127 of the basic sequence shown in FIGS. 2 and 3 and a processing termination notification HTML file is sent and the processing is terminated.

If a request for the linked page of "BACKUP MODE" is not received at step S215, whether or not a request for the linked page of "MOVE" on the Web display screen shown in FIG. 7 (a) is received from the mobile terminal 30 is determined at step S217. If a request is received, the processing is terminated; if not received, whether or not a request for any other linked page is received from the mobile terminal 30 is determined at step S218.

If a request for any other linked page is received at step S218, the process returns to step S201; if not received, the process returns to step S208.

On the other hand, if it is determined above at step S202 that the format of the acquired data is contained in the user registration information in the user and terminal profile information table 28, an HTML file for displaying a display-impossible notification and retention/non-retention selection screen in the PC terminal as shown in FIG. 7 (b) is sent to the mobile terminal 30 (step S219).

Whether or not a request for the linked page of "No" on the display-impossible notification and retention/non-retention selection screen in the PC terminal shown in FIG. 7 (b) is received from the mobile terminal 30 is determined (S220). If a request for the linked page of "No" is received as a result of the determination, the processing is terminated.

Next, whether or not "Yes" is selected on the display-impossible notification and retention/non-retention selection screen in the PC terminal displayed on the mobile terminal 30 for making a request for the linked page is determined (step S221). If a request for the linked page of "Yes" is not received as a result of the determination, the process returns to step S220 and the system waits for a linked page request from the mobile terminal 30. On the other hand, if a request for the linked page of "Yes" is received, the process goes to step S222.

At step S222, the linked page is retained in the specified folder in the user and terminal profile information table 28. Subsequently, whether or not retention of the linked page ended in success is determined at step S223. If retention of the linked page ended in success, an HTML file for displaying a screen, for example, as shown in FIG. 7 (c) for notifying that retention of the linked page ended in success is sent to the mobile terminal 30 at step S224 and the process goes to step S226. On the other hand, if retention of the linked page ended in failure, an HTML file for displaying a screen for notifying that retention of the linked page ended in failure is sent and then the process goes to step S226.

At step S226, receiving a request for the linked page of "OK" from the mobile terminal 30 is monitored and if a request for the linked page of "OK" is received, the processing is terminated.

### (Web page registration processing)

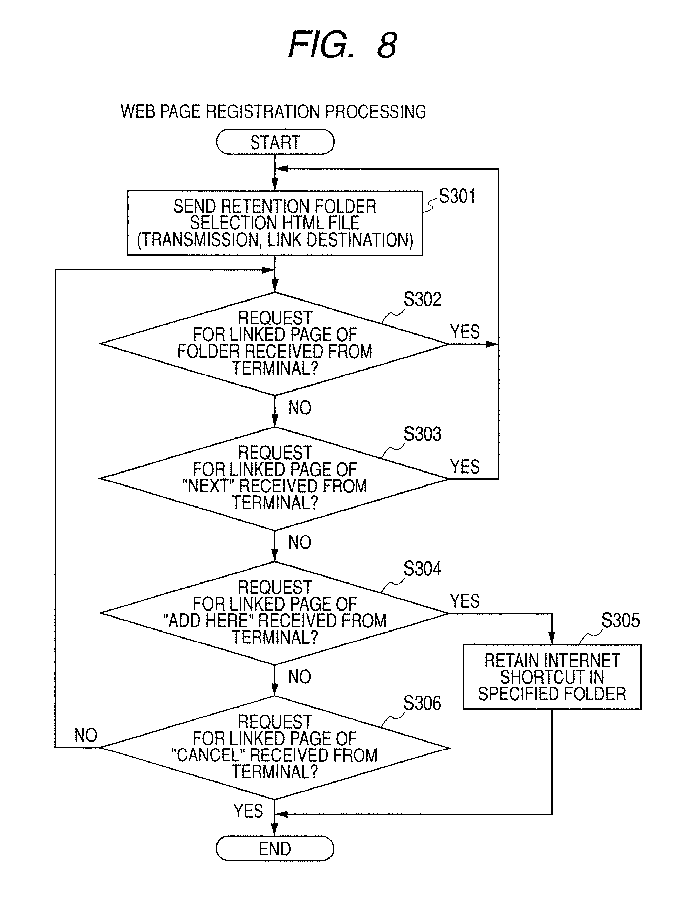

FIG. 8 is a flowchart to describe a Web page registration processing procedure of the content providing system according to the embodiment.

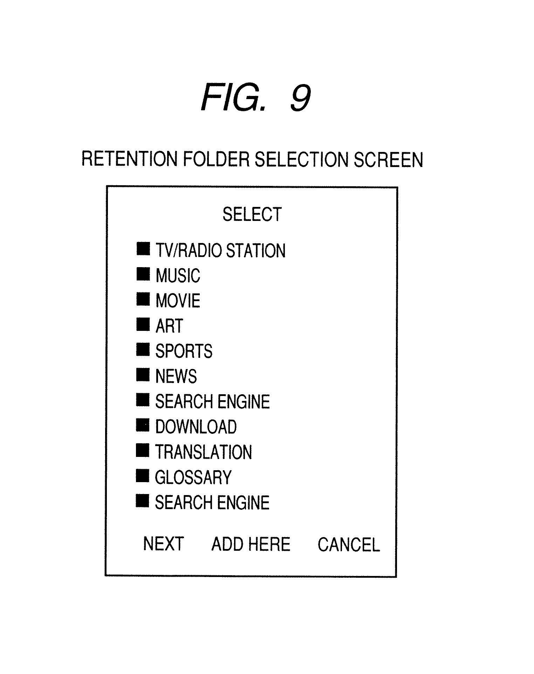

First, at step S301, an HTML file for creating a screen to select a retention folder as shown in FIG. 9 is sent at step S301.

Next, at step S302, whether or not a request for the linked page of the selected retention folder is received from the mobile terminal 30 is determined. If a request is received, the process returns to step S301.

On the other hand, if a request for the linked page of the selected retention folder is not received at step S302, whether or not a request for the linked page of "NEXT" is received is determined at step S303. If a request is received, the process returns to step S301.

At step S304, whether or not a request for the linked page of "ADD HERE" is received from the mobile terminal 30 is determined. If a request is received as a result of the determination, Internet shortcut is retained in the specified folder (step S305) and then the processing is terminated.

On the other hand, if it is not determined at step S304 that a request for the linked page of "ADD HERE" is received, whether or not a request for the linked page of "CANCEL" is received from the mobile terminal 30 is determined at step S306. If a request is not received as a result of the determination, the process returns to step S302; if a request is received, the processing is terminated.

### (Backup mode change processing)

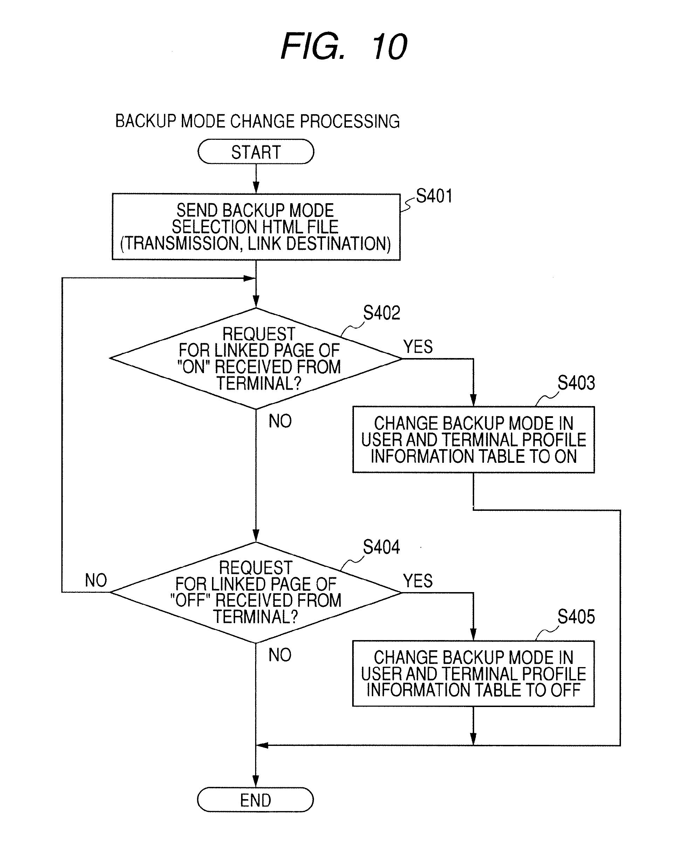

FIG. 10 is a flowchart to describe a backup mode change processing procedure of the content providing system according to the embodiment.

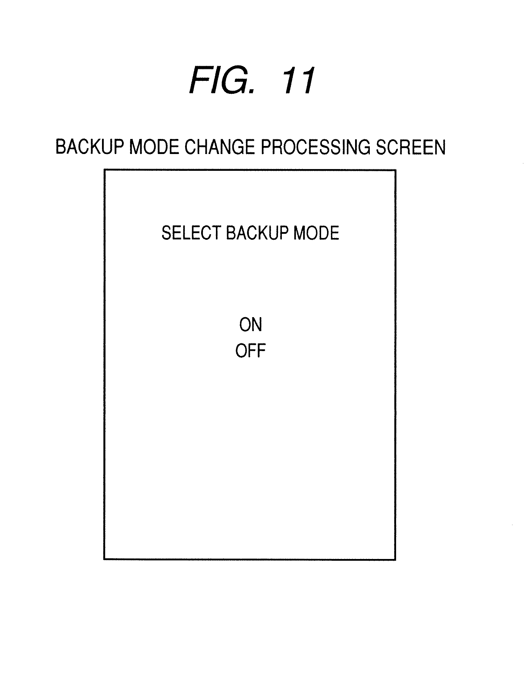

First, at step S401, an HTML file for creating a backup mode change screen as shown in FIG. 11 is sent.

Next, at step S402, whether or not a request for the linked page of "ON" is received from the mobile terminal 30 is determined. If a request is received, the backup mode in the user and terminal profile information table 28 is changed to ON (step S403) and then the processing is terminated.

On the other hand, if it is not determined at step S402 that a request for the linked page of "ON" is received, whether or not a request for the linked page of "OFF" is received from the mobile terminal 30 is determined at step S404. If a request is not received as a result of the determination, the process returns to step S402; if a request is received, the processing is terminated.

### (File browsing processing)

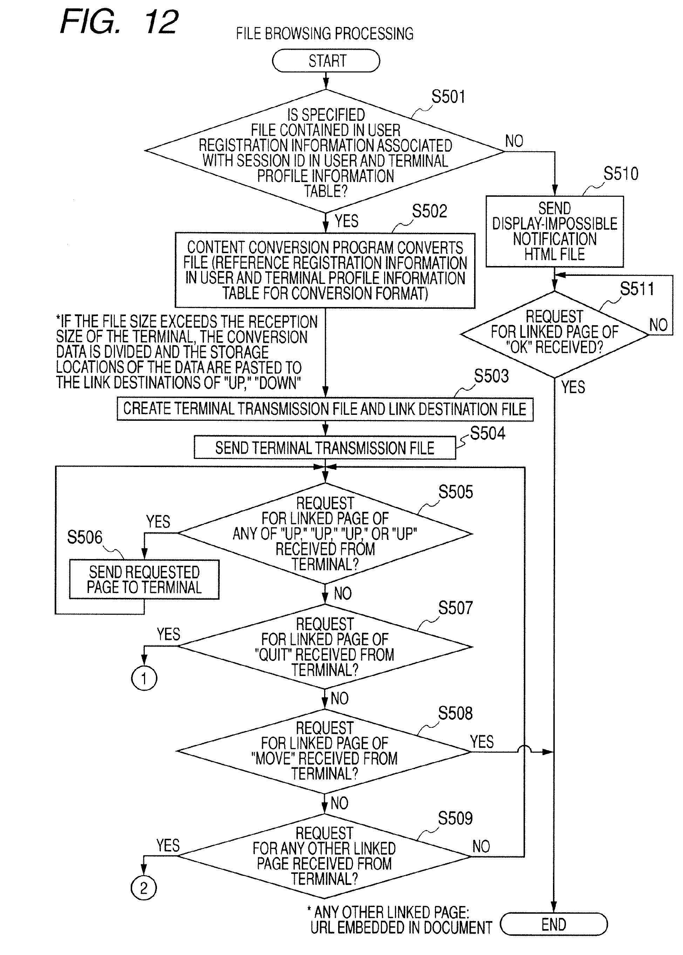

FIG. 12 is a flowchart to describe a file browsing processing procedure of the content providing system according to the embodiment of the invention.

First, whether or not the specified file is contained in the user registration information associated with the session ID in the user and terminal profile information table 28 is determined (step S501). If it is determined that the file is contained in the user registration information, the content conversion program 23 converts the file (step S502). At this time, if the file size exceeds the reception size of the mobile terminal 30, the conversion data is divided and the storage locations of the divided data are pasted to the link destinations of "UP," "DOWN."

Next, a file to be sent to the mobile terminal 30 and a link destination file are created (step S503) and the created files are sent to the mobile terminal 30 (step S504).

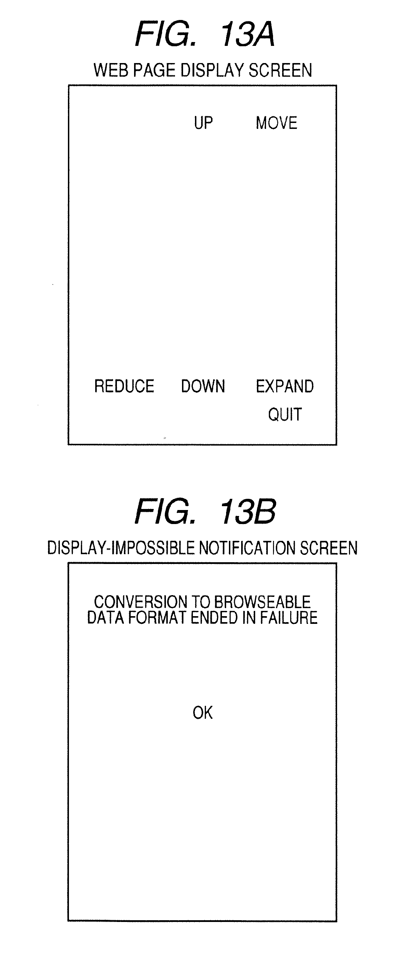

At step S505, whether or not a request for the linked page of any of "UP," "DOWN," "EXPAND," or "REDUCE" on a file display screen shown in FIG. 13 (a) is received from the mobile terminal 30 is determined. If a request for the linked page is received, the requested linked page is sent to the mobile terminal 30 at step S506 and the process returns to step S505.

On the other hand, if no request for the linked page is received as a result of the determination at step S505, whether or not a request for the linked page of "QUIT" is received from the mobile terminal 30 is determined at step S507. If a request is received, the process jumps to step S127 of the basic sequence shown in FIGS. 2 and 3 and a processing notification HTML file is sent to the mobile terminal 30 and the processing is terminated.

If a request for the linked page of "QUIT" is not received at step S507, whether or not a request for the linked page of "MOVE" is received from the mobile terminal 30 is determined at step S508. If a request is received, the processing is terminated.

On the other hand, if a request for the linked page of "MOVE" is not received at step S508, whether or not a request for any other linked page is received from the mobile terminal 30 is determined at step S509.

If a request for any other linked page is received at step S509, the process jumps to step S201 of the processing procedure in the Web page browsing shown in FIG. 7 and data is acquired from the Web server. On the other hand, if a request for any other linked page is not received, the process returns to step S505.

If it is not determined at step S501 that the specified file is contained in the user registration information associated with the session ID in the user and terminal profile information table 28, an HTML file for creating a display-impossible notification screen as shown in FIG. 13 (b) is sent to the mobile terminal 30 and receiving a request for the linked page of "OK" from the mobile terminal 30 in response to the file is monitored (step S511). If a request for the linked page of "OK" is received, the processing is terminated.

As described above, according to the content providing method of the embodiment of the invention, the PC terminal 20 has the user and terminal profile information table 28 for retaining the managed account name and the user agent information and the specifications of the mobile terminal 30 corresponding to the account name. When the PC terminal 20 is accessed from the mobile terminal 30, if the user ID or the individual ID extracted from the user agent information is retained in the user and terminal profile information table 28, access to a predetermined folder is permitted and content is provided through the selection screen described in the browseable format on the mobile terminal 30.

Accordingly, the URL retained by the PC terminal 20 can be used from the mobile terminal 30 and the content retained in the PC terminal 20 can also be easily acquired via the standard viewer of the mobile terminal 30.

While the invention has been described in detail with reference to the specific embodiments, it will be obvious to those skilled in the art that various changes and modifications can be made without departing from the spirit and the scope of the invention.

This application is based on Japanese Patent Application (No. 2005-075025) filed on March 16, 2005, the contents of which are incorporated herein by reference.

### Industrial Applicability

The invention has the advantages that it is made possible to use the URL information retained by a PC terminal from a mobile terminal and the content acquired as the mobile terminal accesses any URL can be stored in the PC terminal, and is useful for a content providing system.

## Claims

1. An information processing terminal being capable of conducting a communication with a mobile communication terminal and being provided with content data from a Web server, the information processing terminal comprising:
a content identifier storage unit that stores a content identifier corresponding to the content data;
a table storage unit that stores a table including a user ID for each mobile communication terminal and a terminal ID and a terminal specification of the mobile communication terminal corresponding to the user ID;
an extraction unit that extracts the user ID and the terminal ID of the mobile communication terminal when the information processing terminal is accessed from the mobile communication terminal;
a determination unit that permits the mobile communication terminal to access the content identifier storage unit when the user ID and the terminal ID extracted by the extraction unit are stored in the table; and
a selection acceptance unit that accepts selection operation from the mobile communication terminal for selecting the content identifier stored in the content identifier storage unit when the determination unit permits the mobile communication terminal to access the content identifier storage unit.

2. The information processing terminal according to claim 1, comprising:
a reception unit that receives the content data corresponding to the content identifier accepted through the selection acceptance unit from the Web server;
a conversion unit that references the terminal specification responsive to the terminal ID of the mobile communication terminal and converts the content data received by the reception unit into a browseable format on the mobile communication terminal; and
a sending unit that sends the content data converted by the conversion unit to the mobile communication terminal.

3. The information processing terminal according to claim 1, comprising:
a reception unit that receives the content data corresponding to the content identifier accepted through the selection acceptance unit from the Web server; and
a content data storage unit that stores the content data received by the reception unit,
wherein the content data storage unit stores the content data that cannot be browsed on the mobile communication terminal, of the content data received by the reception unit.

4. The information processing terminal according to claim 3, comprising:
a conversion unit that references the terminal specification responsive to the terminal ID and converts the content data stored in the content data storage unit into a browseable format on the mobile communication terminal; and
a sending unit that sends the content data converted by the conversion unit to the mobile communication terminal,
wherein the content data storage unit divides the content data received by the reception unit for storage;
wherein the conversion unit converts each piece of the content data divided and stored in the content data storage unit into a browseable format on the mobile communication terminal; and
wherein the sending unit sends the each piece of the content data converted by the conversion unit to the mobile communication terminal by mail.

5. The information processing terminal according to claim 4, wherein the content data sent by mail is limited in the number of playback times.

6. The information processing terminal according to any one of claims 2 to 5, comprising:
a registration unit that registers a different content identifier which is contained in the content data received by the reception unit as link information in the content identifier storage unit.

7. The information processing terminal according to any one of claims 2 and 4 to 6, wherein the sending unit includes VoIP calling unit; and
wherein when the content data corresponding to the content identifier selected through the mobile communication terminal contains audio data, the VolP calling unit calls the mobile communication terminal according to VolP and sends the audio data.

8. A content providing system, comprising:
the information processing terminal according to any one of claims 1 to 7;
a mobile communication terminal that can conduct a communication with the information processing terminal; and
a Web server that provides content data to the information processing terminal through the Internet.

9. A content providing method of providing content data stored in a Web server connected to the Internet to a mobile communication terminal from an information processing terminal connected to the Internet, the content providing method, comprising:
an extraction step of extracting a user ID and a terminal ID of the mobile communication terminal by the information processing terminal when the information processing terminal is accessed from the mobile communication terminal;
a permission step of permitting access from the mobile communication terminal by the information processing terminal when the extracted user ID and terminal ID are contained in a table including the user ID for each mobile communication terminal and the terminal ID and the terminal specification of the mobile communication terminal corresponding to the user ID, stored in the information processing terminal; and
a selection step of selecting a content identifier corresponding to the content data stored in the information processing terminal by the mobile communication terminal.

10. The content providing method according to claim 9, comprising:
a reception step of receiving the content data corresponding to the content identifier selected by the mobile communication terminal from the Web server by the information processing terminal;
a conversion step of referencing the terminal specification responsive to the terminal ID of the mobile communication terminal and converting the received content data into a browseable format on the mobile communication terminal by the information processing terminal; and
a sending step of sending the converted content data to the mobile communication terminal by the information processing terminal.

11. The content providing method according to claim 9, comprising:
a reception step of receiving the content data corresponding to the content identifier selected by the mobile communication terminal from the Web server by the information processing terminal; and
a storage step of storing the content data that cannot be browed on the mobile communication terminal, of the received content data by the information processing terminal.

12. The content providing method according to claim 11, comprising:
a conversion step of referencing the terminal specification responsive to the terminal ID and converting the stored content data into a browseable format on the mobile communication terminal by the information processing terminal; and
a sending step of sending the converted content data to the mobile communication terminal by the information processing terminal,
wherein the storage step divides the received content data for storage,
wherein the conversion step converts each piece of the content data divided and stored into a browseable format on the mobile communication terminal; and
wherein the sending step sends the each piece of the converted content data to the mobile communication terminal by mail.

13. The content providing method according to any one of claims 10 to 12, comprising a registration step of registering a different content identifier contained in the received content data as link information in the information processing terminal.

14. A content providing program for causing a computer to execute the steps of a content providing method according to any one of claims 9 to 13.
